# EUROPÄISCHE PATENTSCHRIFT

(11) **EP 2 676 932 B1**
(45) Veröffentlichungstag und Bekanntmachung des Hinweises auf die Patenterteilung: **25.03.2015**
(21) Anmeldenummer: 12004616.4
(22) Anmeldetag: 20.06.2012
(51) Int. Cl.: C01F 7/02, C01F 7/20, C01F 7/47, C22B 3/00, C22B 21/00, C22B 3/04, C22B 3/22, C22B 3/44, C01F 7/06, C01B 33/26

(54) **Verfahren zur komplexen Verarbeitung von Bauxit**
Process for complex processing of bauxite
Procédé de traitement complexe de la bauxite

(43) Veröffentlichungstag der Anmeldung: 25.12.2013
(73) Patentinhaber: Pleason Ventures LTD, Limassol (CY)
(72) Erfinder: Welter, Alexander, 30177 Hannover (DE)
(74) Vertreter: von Füner, Nicolai

(56) Entgegenhaltungen:
- US-A- 3 442 795
- US-A- 5 628 972
- PAPASSIOPI N ET AL: "Effectiveness of iron reducing bacteria for the removal of iron from bauxite ores", MINERALS ENGINEERING, PERGAMON PRESS , OXFORD, GB, Bd. 23, Nr. 1, 1. Januar 2010 (2010-01-01) , Seiten 25-31, XP026736300, ISSN: 0892-6875, DOI: 10.1016/J.MINENG.2009.09.005 [gefunden am 2009-10-08]

## Beschreibung

Die vorliegende Erfindung betrifft die NE-Metallurgie, insbesondere das Gebiet der Tonerdeherstellung aus Bauxiten. Das Verfahren ist besonders wirksam bei der Verarbeitung von siderithaltigen Bauxiten.

Die Hauptkomponenten der Bauxite sind Aluminium- und Eisenverbindungen. Bei der Herstellung von Tonerde aus Bauxiten wird der maximal möglich Anteil an Aluminiumoxid gewonnen, während alle Eisenverbindungen auf Halde gekippt werden, wobei in einigen Tonerdeproduktionsanlagen bis zu einer Million Tonnen Eisenoxid jährlich anfallen können. Die Abscheidung der Eisenverbindungen bei der Herstellung von Tonerde führt nicht nur zur Verbesserung der verfahrenstechnischen Parameter der Arbeitsschritte für die Eindickung und das Waschen von Rotschlamm bzw. für das Sintern des Schlammbeschickungsguts, sondern hat auch einen überaus positiven Einfluss auf die Umwelt bei der Verlängerung der Lebendauer der Schlammfelder.

Bekannt sind Verfahren zur Eisenabscheidung sowohl aus Bauxit als auch aus Rotschlamm. Nach dem Verfahren von Pedersen wird ein Gemisch aus Bauxit und Calciumoxid im Lichtbogenofen bei einer Temperatur von 1500 °C geschmolzen, wobei Roheisen und Aluminium-Calcium-Schlacke entsteht, die zur Herstellung der Tonerde hydrometallurgisch weiterverarbeitet wird (s. Ni L.P., Gol'dman M.M., Solenko T.V. Pererabotka vysokozelezistych boksitov - Metallurgija, M., 1979, S. 203).

Bekannt ist auch die modifizierte aufeinanderfolgende Variante des Bayer-Verfahrens, d.h. die Sinterung mit der Zwischenstufe der Eisenabscheidung durch Schmelzen von Rotschlamm in Gegenwart eines Reduktionsmittels bei einer Temperatur von 1250 - 1300 °C nach dem Krupp-Renn-Verfahren unter magnetischer Eisenabscheidung, Sintern der Schlacke mit Kalkstein und Soda bei 1200 °C, Auslaugung des Sinterkuchens zur Gewinnung der Natrimaluminatlösung und Verwendung des Schlamms zur Herstellung von Zement (ibid., S. 205).

Bekannt ist ein Verfahren der magnetisierenden Röstung von siderithaltigem Bauxit zum Zwecke des Sideritabbaus und der Umwandlung der Eisenverbindungen in magnetische Verbindungen unter nachfolgender Gewinnung derselben durch Magnetscheidung (ibit., S. 215).

Die obigen Verfahren zur Eisenabscheidung sowohl aus Bauxit als auch aus Rotschlamm setzen die pyrometallurgischen Stufen des Röstens bzw. Schmelzens voraus, was zu einer Steigerung des Kapitalaufwands beim Bau und der Betriebskosten für Energieträger und das Reduktionsmittel führt. Die pyrometallurgischen Arbeitsschritte sind mit erheblichen umweltbelastenden Emissionen verbunden.

Die am nächsten kommende Lösung im Hinblick auf die beanspruchte Erfindung ist ein Verfahren zur Aluminium- und Eisengewinnung aus aluminiumhaltigen Erzen (s. US-PS Nr. 2155919, Kl. C22B 3/10, C225 3/22, C22B 21/00, C22B 3/38, C22B 3/00, veröffentlicht am 24.02.2010). In dieser Patentschrift werden Prozesse der Gewinnung von Aluminium- und Eisenionen aus tonerdehaltigen Erzen beschrieben. Das Verfahren der Gewinnung aus Erzen besteht in der Auslaugung des vorgerösteten Erzes unter Anwendung von Säure zur Herstellung des Auslaugungsproduktes und eines festen Niederschlags. Das Auslaugungsprodukt enthält in der Lösung Aluminium- und Eisenionen. Das Verfahren der Gewinnung der Aluminiumionen aus einem Gemisch, das Eisen- und Aluminiumionen enthält, besteht in der Gewinnung der Aluminiumionen aus einem Gemisch, das Eisen- und Aluminiumionen, ein organisches Lösungsmittel und ein Extraktionsmittel enthält, das für die Herstellung eines metallorganischen Komplexes im Wesentlichen selektiv mit den genannten Eisen- bzw. Aluminiumionen geeignet ist, die im genannten organischen Lösungsmittel löslich sind.

Der Nachteil dieses Verfahrens besteht in der Notwendigkeit der Erzvorröstung und in der Schwierigkeit der Säurerückgewinnung während der Auslaugung, was einen erhöhten Energieaufwand bedingt und stark umweltbelastend ist.

Die Aufgabe der vorliegenden Erfindung besteht in der Effizienzsteigerung bei der Bauxitverarbeitung, darunter auch bei der Verarbeitung von siderithaltigem Bauxiten zur Herstellung von Tonerde sowie von handelsüblichem Eisenerzkonzentrat.

Das technische Ergebnis ist die Abscheidung von Eisenverbindungen in Form eines handelsüblichen Produktes auf der ersten Stufe der Bauxitverarbeitung zu Tonerde nach dem Bayer-Verfahren bzw. nach dem Bayer-Sinter-Prozess.

Die gestellte Aufgabe wird nach zwei Varianten gelöst:

### Variante 1

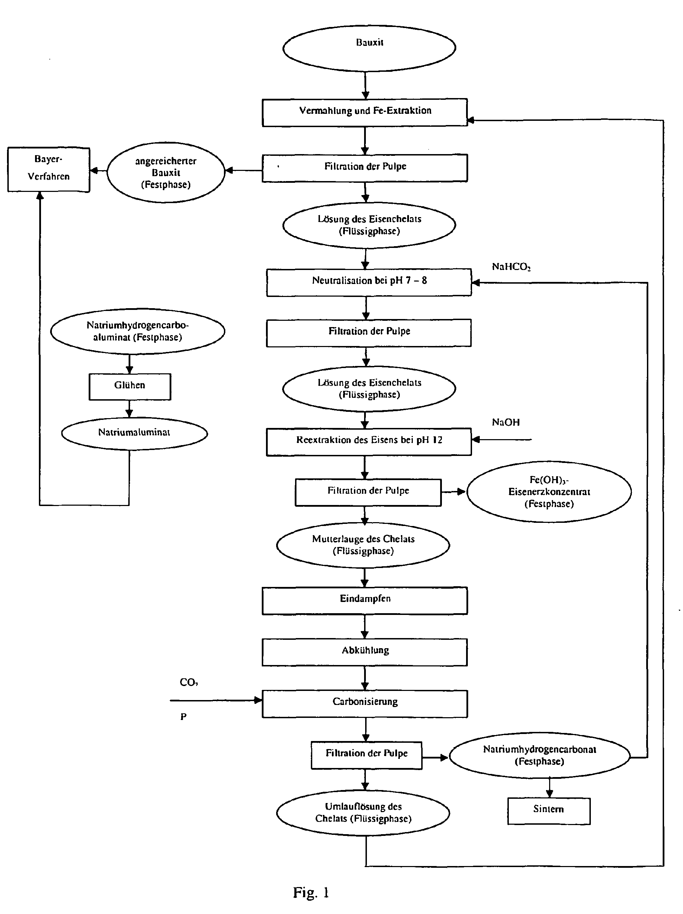

Das grundsätzliche Verfahrensschema ist in Fig. 1 dargestellt.

Bauxit wird unter Anwendung einer umlaufenden Chelatlösung, d.h. einer Mischung aus dem Natriumsalz der Ethylendiamintetraessigsäure und einer schwachen Säure wie z.B. Essigsäure vermahlen. Bei der Erwärmung der Suspension erfolgt dann die Eisenabscheidung aus eisenhaltigen Verbindungen von Bauxiten unter Bildung eines Eisenchelats:

Fe₂O₃ + 2Na₂H₂edta + 2CH₃COOH = 2Na[Fe edta] + 2CH₃COONa + 3H₂O [1]

FeCO₃ + Na₂H₂edta = Na₂[Fe edta] + H₂O + CO₂ [2]

Neben dem Eisenchelat entsteht in geringen Mengen auch das Aluminiumchelat Na[A1 edta]. Die Suspension wird nach der Eisenabscheidung aufgetrennt in eine Festphase, den angereicherten desideritisierten Bauxit, der nach einem beliebigen bekannten Verfahren zu Tonerde weiterverarbeitet wird, und in die Flüssigphase, die durch zweifache Änderung des pH der Lösung zersetzt wird. Die Neutralisation des Eisenchelats bei pH 7 - 8 erfolgt mit umlaufendem Natiumhydrogencarbonat, wobei Natriumhydrogencarboaluminat ausfällt, das von der Lösung abgetrennt wird.

Na[Aledta] + 4 NaHCO₃ = NaAl[CO₃₁(OH)₂↓ + Na₄edta + 3CO₂ + H₂O [3]

Die erneute Eisenextraktion aus dem Eisenchelat erfolgt bei einem pH der Lösung von bis zu 12 unter Ausfällen von Eisenhydroxid:

Na[Fe edta] + 3NaOH = Fe(OH)₃↓ + Na₄ edta [4]

Na₂[Fe edta] + 2NaOH = Fe(OH)₂↓ + Na₄ edta [5]

Die Suspension wird dann aufgetrennt, und zwar in Eisenhydroxid als Festphase, welches das Handelsprodukt darstellt, und in eine Flüssigphase, die Mutterlauge des Chelats. Die Mutterlauge des Chelats wird dann eingedampft, abgekühlt und mit gasförmigem Kohledioxid unter einem Druck von mindestens 16 bar zum Auskristallisieren von Natriumhydrogencarbonat karbonisiert:

Na₄edta + 2CO₂ + 2H₂O → Na₂H₂edta + 2NaHCO₃↓ [6]

CH₃COONa + CO₂ + H₂O = CH₃COOH + NaCHO₃↓ [7]

Die Suspension wird dann aufgetrennt in eine Flüssigphase, die umlaufende Chelatlösung, und eine Festphase, die Natriumhydrogencarbonat darstellt. Die Festphase wird in 2 Ströme aufgetrennt, und zwar in einen umlaufenden Strom für die Neutralisierung und einen zweiten Strom, der abgeleitet wird und z.B. der Sinterung der Tonerdecharge zugeführt wird.

Das Natriumhydrocarboaluminat wird bei einer Temperatur von 700 - 900 °C unter Bildung von Natriumaluminat geglüht:

NaAl[CO_{3]}(OH)₂ → Na₂O AL₂O₃ + CO₂↑ + H₂O↑ [8]

Das feste Natriumaluminat wird dann der Herstellung von Tonerde zugeführt.

### Variante 2

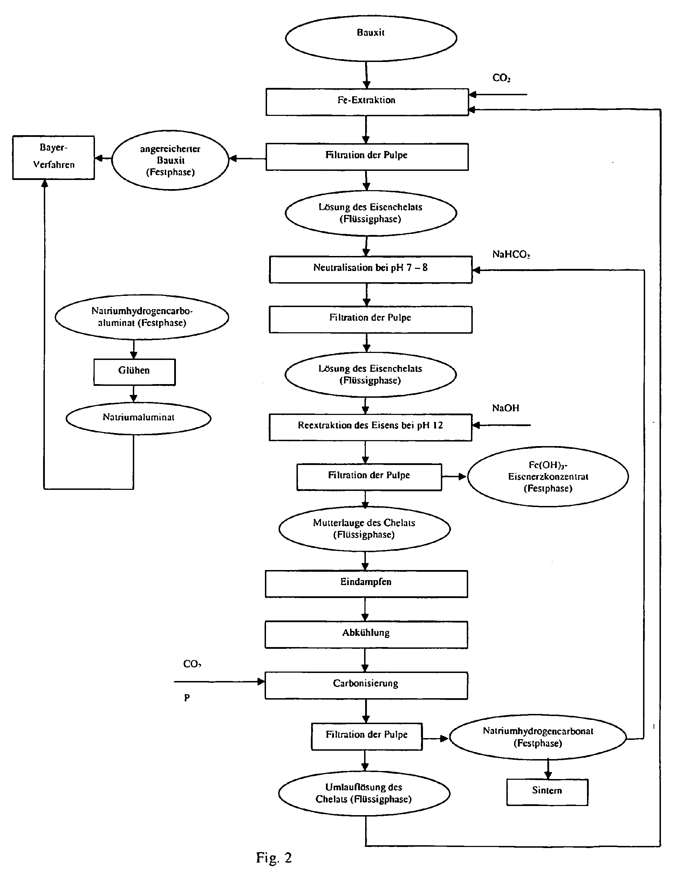

Das grundsätzliche Verfahrensschema ist in Fig. 2 dargestellt.

Bauxit wird unter Anwendung einer umlaufenden Chelatlösung (Natriumsalz der Ethylendiamintetraessigsäure) vermahlen. Bei der Erwärmung der Suspension unter Karbonisierung mit CO₂ und einem Druck von mindestens 16 bar erfolgt dann die Eisenabscheidung aus den eisenhaltigen Verbindungen des Bauxits unter Bildung von Eisenchelat:

Fe₂O₃ + 2Na₂H₂edta + 2CO₂ = 2Na[Fe edta] + 2NaHCO₃ + H₂O [9]

FeCO₃ + Na₂H₂edta = Na₂[Fe edta] + CO₂ + H₂O [10]

Die Zersetzung des Chelats und die erneute Eisenabscheidung erfolgen analog zu Variante 1.

Nach der erneuten Eisenabscheidung wird die Suspension aufgetrennt, und zwar in Eisenhydroxid als Festphase, welches das Handelsprodukt darstellt, und in eine Flüssigphase, die Mutterlauge des Chelats. Die Mutterlauge des Chelats wird dann eingedampft, abgekühlt und mit gasförmigem Kohledioxid unter Druck zum Auskristallisieren von Natriumhydrogencarbonat karbonisiert:

Na₄edta + 2CO₂ + 2H_{2O} → Na₂H₂edta + 2NaHCO₃↓ [11]

Weiter verläuft der Prozess gemäß Variante 1.

Das vorliegende Verfahren gewährleistet die komplexe Verarbeitung von Bauxit unter Herstellung von metallurgischer Tonerde und konditioniertem Eisenerz-Rohstoff.

### Verwendungsbeispiele.

### Beispiel 1

Für den Versuch wurde eine Probe von siderithaltigem Bauxit verwendet. Die chemische Zusammensetzung des Bauxits ist in Tabelle 1 dargestellt.

Die Bauxitprobe wurde in einer Labormühle vermahlen und mit der Lösung einer Mischung aus dem Dinatriumsalz der Ethylendiamintetraessigsäure bei einer Konzentration von 150 g/dm³ und 70 g/dm³ Essigsäure für die Eisenabscheidung behandelt.

### Extraktionsbedingungen

Das Gewichtsverhältnis Flüssigstoff: Feststoff in der Ausgangssuspension der Lösung und das Gewichtsverhältnis Flüssigstoff : Feststoff der Bauxitlösung beträgt 14,5.
Dauer 1 Stunde.
Temperatur 100 °C.

Nach der Extraktion wurde die Suspension durch Filtration getrennt, und der feste Niederschlag wurde gewaschen. Der feste Niederschlag stellte den angereicherten, CO₂-freien Bauxit dar. Die Flüssigphase, die Lösung des Eisenchelats, wurde mit Natriumhydrogencarbonat bis zu einem pH von 7,5 neutralisiert, wodurch das Natriumhydrogencarboaluminat ausfiel. Der Niederschlag wurde abfiltriert und gewaschen.

Die neutralisierte Lösung des Eisenchelats wurde mit einer Ätzlauge versetzt, um den pH der Lösung auf 12 anzuheben. Dies bewirkte die Zersetzung des Eisenchelats unter Ausfällung des eisenhaltigen Produktes. Der Niederschlag wurde abfiltriert und gewaschen.

Zersetzungsbedingungen:
Temperatur 100 °C.
Dauer 5 Stunden.

Das Hydrogenalumocarbonat wurde bei einer Temperatur von 750 °C innerhalb von 30 Minuten unter Erzielung von festem Natriumaluminat geglüht.

Die Zusammensetzungen des Ausgangsbauxits und der erhaltenen Produkte sind in Tabelle 1 dargestellt.

### Beispiel 2

Für den Versuch wurde eine Probe von siderithaltigem Bauxit verwendet. Die chemische Zusammensetzung des Bauxits ist in Tabelle 2 dargestellt.

Die Bauxitprobe wurde in einer Labormühle vermahlen und mit der Lösung des Dinatriumsalzes der Ethylendiamintetraessigsäure bei einer Konzentration von 120 g/dm³ für die Eisenabscheidung behandelt.

### Extraktionsbedingungen

Das Gewichtsverhältnis Flüssigstoff: Feststoff in der Ausgangssuspension der Lösung und das Gewichtsverhältnis Flüssigstoff : Feststoff der Bauxitlösung beträgt 14,5.
Dauer 5 Stunden.
Temperatur 120 °C.
CO₂-Druck 40 bar.

Nach der Extraktion wurde die Suspension durch Filtration getrennt, und der feste Niederschlag wurde gewaschen. Der feste Niederschlag stellte den angereicherten, CO₂-freien Bauxit dar. Die Flüssigphase, die Lösung des Eisenchelats, wurde mit Natriumhydrogencarbonat bis zu einem pH von 7,5 neutralisiert, wodurch das Natriumhydrogencarboaluminat ausfiel. Der Niederschlag wurde abfiltriert und gewaschen. Die neutralisierte Lösung des Eisenchelats wurde mit einer Ätzlauge versetzt, um den pH der Lösung auf 12 anzuheben. Dies bewirkte die Zersetzung des Eisenchelats unter Ausfällung des eisenhaltigen Produktes. Der Niederschlag wurde abfiltriert und gewaschen.

Zersetzungsbedingungen:
Temperatur 100 °C.
Dauer 5 Stunden.

Das Hydrogenalumocarbonat wurde bei einer Temperatur von 750 °C innerhalb von 30 Minuten unter Erzielung von festem Natriumaluminat geglüht.

Die Zusammensetzungen des Ausgangsbauxits und der erhaltenen Produkte sind in Tabelle 2 dargestellt.

**Tabelle 1 - Chemische Zusammensetzung des Ausgangsbauxits und der Verarbeitungsprodukte gemäß Variante 1**

| Chemische Zusammensetzung, % | Ausgangsbauxit | Angereicherter Bauxit | Eisenhaltiges Produkt | Natrium- hydrogen- carboaluminat | Natriumaluminat |
|---|---|---|---|---|---|
| Al₂O₃ | 40,1 | 51,0 | 0,3 | 35,8 | 58,3 |
| Na₂O | 0,5 | 0,15 | 1,2 | 20,6 | 33,6 |
| SiO₂ | 10,2 | 12,7 | 0,4 | 3,6 | 5,8 |
| Fe₂O₃ | 22,2 | 7,1 | 83,8 | 1,2 | 2,0 |
| TiO₂ | 2,3 | 2,7 | 0,1 | - | - |
| CO₂ | 1,5 | 0,1 | - | | |

**Tabelle 2 - Chemische Zusammensetzung des Ausgangsbauxits und der Verarbeitungsprodukte gemäß Variante 2**

| Chemische Zusammensetzung, % | Ausgangsbauxit | Angereicherter Bauxit | Eisenhaltiges Produkt | Natrium- hydrogen- carboaluminat | Natriumaluminat |
|---|---|---|---|---|---|
| Al₂O₃ | 40,1 | 50,4 | 0,4 | 35,8 | 55,5 |
| Na₂O | 0,5 | 0,3 | 0,8 | 20,8 | 32,2 |
| SiO₂ | 10,2 | 12,5 | 0,4 | 6,7 | 10,0 |
| Fe₂O₃ | 22,2 | 7,1 | 82,6 | 1,2 | 1,7 |
| TiO₂ | 2,3 | 2,7 | 0,3 | - | - |
| CO₂ | 1,5 | 0,1 | - | | |

## Patentansprüche

1. Verfahren zur komplexen Verarbeitung von Bauxit, **dadurch gekennzeichnet**, **dass** der Bauxit unter Verwendung einer umlaufenden Chelatlösung vermahlen wird, die erhaltene Suspension zur Extraktion des Eisens unter Bildung eines Eisenchelats und einer geringen Menge an Aluminiumchelat erwärmt wird, die Suspension nach der Extraktion des Eisens in eine Festphase, die angereicherten desideritisierten Bauxit darstellt und die man nach bekannten Verfahren zu Tonerde verarbeitet, und in eine Flüssigphase aufgetrennt wird, die durch zweimalige Änderung des pH-Werts der Lösung zersetzt wird, die Neutralisation bis zu einem pH-Wert von 7 - 8 unter Verwendung von umlaufenden Natriumhydrogencarbonat durchgeführt wird, wobei es zur erneuten Extraktion von Aluminium unter Ausfallen eines Niederschlags von Natriumhydrogencarboaluminat kommt, das man von der Lösung abtrennt, die erneute Extraktion des Eisens bei einem pH der Lösung von über 12 unter Ausfällung von Eisenhydroxid durchführt, das in Form eines handelsüblichen Eisenerzkonzentrats abgetrennt wird, die Flüssigphase, welche die Mutterlauge des Chelats darstellt, eingedampft, abgekühlt und unter Druck mit gasförmigem Kohlendioxid zur Auskristallisierung des Natriumhydrogencarbonats carbonisiert wird, das dann von der Chelatlösung abgetrennt wird, wobei die Chelatlösung und das Natriumhydrogencarbonat Umlaufprodukte darstellen.

2. Verfahren nach Anspruch 1, **dadurch gekennzeichnet, dass** die umlaufende Chelatlösung eine Mischung aus dem Natriumsalz der Ethylendiamintetraessigsäure bzw. der Ethylendiamintetraessigsäure und einer schwachen Säure ist.

3. Verfahren nach Anspruch 1, **dadurch gekennzeichnet, dass** die umlaufende Chelatlösung das Natriumsalz der Ethylendiamintetraessigsäure bzw. die Ethylendiamintetraessigsäure darstellt, und die Erwärmung der Suspension unter Carbonisierung mit CO₂ unter einem Druck von mindestens 16 bar erfolgt.

4. Verfahren nach einem der Ansprüche 2 oder 3, **dadurch gekennzeichnet, dass** die Temperatur der Eisenextraktion 100 °C beträgt.

5. Verfahren nach einem der Ansprüche 2 oder 3, **dadurch gekennzeichnet, dass** die Änderung des pH-Werts bei der Reextraktion des Eisens durch Zudosierung von Natriumhydroxid erfolgt.

6. Verfahren nach einem der Ansprüche 2 oder 3, **dadurch gekennzeichnet, dass** bei der Reextraktion des Eisens eine umlaufende Impfkristalllösung des Eisenhydroxids verwendet wird.

7. Verfahren nach einem der Ansprüche 2 oder 3, **dadurch gekennzeichnet, dass** der CO₂. Druck bei der Carbonisierung der Mutterlauge wenigstens 16 bar beträgt.

8. Verfahren nach einem der Ansprüche 2 oder 3, **dadurch gekennzeichnet, dass** das extrahierte Natriumhydrogencarbonaluminat bei einer Temperatur von 700 - 900 °C unter Bildung von Natriumaluminat, das wieder dem Bayer-Verfahren zugeführt wird, geglüht wird.

## Claims

1. Process for the complex processing of bauxite, **characterised in that** the bauxite is ground using a circulating chelate solution, the resulting suspension is heated to extract the iron with the formation of an iron chelate and a minor amount of aluminium chelate, the suspension is separated after the extraction of the iron into a solid phase that represents the enriched desideritised bauxite and which is processed to alumina by known processes, and into a liquid phase that is decomposed by a double change of the pH of the solution, the neutralisation up to a pH of 7 - 8 is carried out using circulating sodium hydrogen carbonate, wherein a renewed extraction of aluminium is effected with the formation of a precipitate of sodium hydrogen carboaluminate that is separated from the solution, the renewed extraction of the iron is carried out at a solution pH of more than 12 by precipitating iron hydroxide that is separated in the form of a commercial iron ore concentrate, the liquid phase that represents the mother liquor of the chelate is concentrated by evaporation, cooled and carbonised with gaseous carbon dioxide under pressure to crystallise out the sodium hydrogen carbonate that is then separated from the chelate solution, wherein the chelate solution and the sodium hydrogen carbonate represent circulating products.

2. Process according to claim 1, **characterised in that** the circulating chelate solution is a mixture of the sodium salt of ethylenediaminetetraacetic acid or of ethylenediaminetetraacetic acid and a weak acid.

3. Process according to claim 1, **characterised in that** the circulating chelate solution represents the sodium salt of ethylenediaminetetraacetic acid or ethylenediaminetetraacetic acid, and the suspension is heated under carbonisation with CO₂ under a pressure of at least 16 bar.

4. Process according to one of claims 2 or 3, **characterised in that** the temperature of the iron extraction is 100 °C.

5. Process according to one of claims 2 or 3, **characterised in that** the change in pH for the re-extraction of the iron is effected by metering in sodium hydroxide.

6. Process according to one of claims 2 or 3, **characterised in that** a circulating seed crystal solution of the iron hydroxide is used for the re-extraction of the iron.

7. Process according to one of claims 2 or 3, **characterised in that** the CO₂ pressure for the carbonisation of the mother liquor is at least 16 bar.

8. Process according to one of claims 2 or 3, **characterised in that** the extracted sodium hydrogen carboaluminate is calcined at a temperature of 700 - 900 °C to form sodium aluminate that is fed again to the Bayer Process.

## Revendications

1. Procédé de traitement complexe de la bauxite, **caractérisé en ce que** la bauxite est broyée en utilisant une solution de chélate en circulation, la suspension obtenue est chauffée en vue de l'extraction du fer en formant un chélate de fer et une faible quantité de chélate d'aluminium, la suspension est séparée après l'extraction du fer en une phase solide, qui représente la bauxite enrichie dont la sidérite a été éliminée et qu'on transforme selon des procédés connus en argile, et en une phase liquide, qui est décomposée par une double modification du pH de la solution, la neutralisation jusqu'à un pH de 7 - 8 en utilisant de l'hydrogénocarbonate de sodium en circulation, ce qui provoque une nouvelle extraction de l'aluminium avec précipitation d'un précipité d'hydrogénocarboaluminate de sodium, qu'on sépare de la solution, on réalise la nouvelle extraction du fer à un pH de la solution supérieur à 12 avec précipitation d'hydroxyde de fer, qui est séparé sous forme d'un concentrat de minerai de fer usuel du commerce, la phase liquide, qui représente la lessive mère du chélate, est concentrée par évaporation, refroidie et carbonisée sous pression avec du dioxyde de carbone gazeux en vue de la séparation par cristallisation de l'hydrogénocarbonate de sodium, qui est alors séparé de la solution de chélate, la solution de chélate et l'hydrogénocarbonate de sodium représentant des produits en circulation.

2. Procédé selon la revendication 1, **caractérisé en ce que** la solution de chélate en circulation est un mélange du sel sodique de l'acide éthylènediaminetétraacétique ou d'acide éthylènediaminetétraacétique et d'un acide faible.

3. Procédé selon la revendication 1, **caractérisé en ce que** la solution de chélate en circulation est le sel sodique de l'acide éthylènediaminetétraacétique ou l'acide éthylènediaminetétraacétique et le chauffage de la suspension avec carbonisation avec du CO2 a lieu sous une pression d'au moins 16 bars.

4. Procédé selon l'une quelconque des revendications 2 ou 3, **caractérisé en ce que** la température de l'extraction du fer est de 100°C.

5. Procédé selon l'une quelconque des revendications 2 ou 3, **caractérisé en ce que** la modification du pH lors de la réextraction du fer a lieu par dosage d'hydroxyde de sodium.

6. Procédé selon l'une quelconque des revendications 2 ou 3, **caractérisé en ce qu'**on utilise, lors de la réextraction du fer, une solution en circulation de cristaux d'ensemencement de l'hydroxyde de fer.

7. Procédé selon l'une quelconque des revendications 2 ou 3, **caractérisé en ce que** la pression du CO2 lors de la carbonisation de la lessive mère est d'au moins 16 bars.

8. Procédé selon l'une quelconque des revendications 2 ou 3, **caractérisé en ce que** l'hydrogénocarboaluminate sodique extrait est calciné à une température de 700-900°C avec formation d'aluminate de sodium qui est à nouveau introduit dans le procédé Bayer.
